# EUROPÄISCHE PATENTSCHRIFT

(11) **EP 4 301 556 B1**
(45) Veröffentlichungstag und Bekanntmachung des Hinweises auf die Patenterteilung: **30.04.2025**
(21) Anmeldenummer: 22707133.9
(22) Anmeldetag: 22.02.2022
(51) Int. Cl.: B25F 5/02

(54) **VERRIEGELUNG FÜR EINEN AKKUMULATOR**
LOCK FOR A BATTERY
VERROUILLAGE POUR UN ACCUMULATEUR

(30) Priorität: 03.03.2021 EP 21160449
(43) Veröffentlichungstag der Anmeldung: 10.01.2024
(73) Patentinhaber: Hilti Aktiengesellschaft, 9494 Schaan (LI)
(72) Erfinder: JAKOB, Manfred, 86916 Kaufering (DE)
(74) Vertreter: Hilti Aktiengesellschaft Corporate Intellectual Property
(86) Internationale Anmeldenummer: PCT/EP2022/054353
(87) Internationale Veröffentlichungsnummer: WO 2022/184496

(56) Entgegenhaltungen:
- EP-A1- 2 875 910
- EP-A1- 3 120 977
- WO-A1-2019/002125
- DE-A1- 102005 036 448
- DE-A1- 102018 219 397
- DE-A1- 102018 219 399
- DE-U1- 202007 014 418
- US-A1- 2007 102 268
- US-A1- 2020 295 506

## Beschreibung

Die vorliegende Erfindung betrifft ein System enthaltend eine Werkzeugmaschine und einen Akkumulator zur Versorgung der Werkzeugmaschine mit elektrischer Energie.

Des Weiteren betrifft die vorliegende Erfindung einen Akkumulator zur Versorgung einer Werkzeugmaschine mit elektrischer Energie.

Aus dem Stand der Technik sind Systeme bestehend aus einer Werkzeugmaschine und einem Akkumulator als Energieversorgung sind weitestgehend bekannt. Darüber hinaus sind auch Akkumulatoren zur Versorgung einer Werkzeugmaschine mit elektrischer Energie aus dem Stand der Technik weitestgehend bekannt. Beispiele sind aus der US 2020/295506 A1, DE 10 2018 219397 A1, DE 20 2007 014418 U1 oder DE 10 2018 219399 A1 bekannt.

Für gewöhnlich wird ein Akkumulator zur Versorgung der Werkzeugmaschine mit elektrischer Energie über eine Schnittstelle mit der Werkzeugmaschine wiederlösbar verbunden. Die Schnittstelle weist dabei mechanische und elektrische Komponenten auf. Die mechanischen Komponenten dienen zur mechanischen Anbindung des Akkumulators an die Werkzeugmaschine in Form einer formflüssigen Verbindung. Die elektrischen Komponenten dienen zur Übertragung der elektrischen Energie aus dem Akkumulator zur Werkzeugmaschine. Bei den mechanischen Komponenten handelt es sich oftmals um ein Schienensystem, mit dem der Akkumulator an die Werkzeugmaschine geschoben werden kann. Die elektrischen Komponenten sind für gewöhnlich als Steckkontakte, d.h. Stecker und Buchse, ausgestaltet, sodass ein Stecker an dem Akkumulator in eine entsprechende Buchse an der Werkzeugmaschine gesteckt werden kann. In dem der Akkumulator mit Hilfe der Schienen auf die Werkzeugmaschine geschoben wird, werden die Stecker des Akkumulators mit den Buchsen der Werkzeugmaschine verbunden.

Bei der Verwendung einer Werkzeugmaschine mit einem angeschlossenen Akkumulator kann es zu erheblichen mechanischen Beanspruchungen in Form von Vibrationen oder Schlägen kommen. Insbesondere bei der Ausgestaltung der Werkzeugmaschine als Bohr- oder Meißelhammer kann es in den meisten Anwendungsfällen zu relativ starken Vibrationen kommen. Dadurch, dass die Werkzeugmaschine und der Akkumulator unterschiedliche Massen aufweisen, vibriert die Werkzeugmaschine und der Akkumulator unterschiedlich zueinander. Hierdurch kommt es zu einer relativen Bewegung zwischen der Werkzeugmaschine und dem Akkumulator, sodass sowohl die mechanischen als auch elektrischen Verbindungskomponenten an der

Schnittstelle zwischen der Werkzeugmaschine und dem Akkumulator beschädigt werden können.

Insbesondere die Stecker-Buchse-Verbindung des Akkumulators mit der Werkzeugmaschine ist empfindlich gegenüber diesen Relativbewegungen bzw. gegenüber Vibrationen.

Aufgabe der vorliegenden Erfindung ist es daher, ein System enthaltend eine Werkzeugmaschine und einen Akkumulator zur Versorgung der Werkzeugmaschine mit elektrischer Energie sowie einen Akkumulator zur Versorgung einer Werkzeugmaschine mit elektrischer Energie bereitzustellen, der wenigstens das vorstehend genannte Problem löst.

Die Aufgabe wird jeweils gelöst durch den Gegenstand des unabhängigen Anspruchs 1 und 5.

Weitere vorteilhafte Ausgestaltungsformen der Erfindung finden sich in den entsprechenden Unteransprüchen.

Die Aufgabe wird insbesondere gelöst durch ein System enthaltend eine Werkzeugmaschine und einen Akkumulator zur Versorgung der Werkzeugmaschine mit elektrischer Energie.

Erfindungsgemäß ist vorgesehen, dass der Akkumulator eine Verriegelungsvorrichtung zum wiederlösbaren Verbinden des Akkumulators mit der Werkzeugmaschine enthält, wobei die Verriegelungsvorrichtung wenigstens ein erstes und zweites miteinander gelenkig verbundene Hebelelement enthält, sodass die Verriegelungsvorrichtung reversibel von einer Verriegelungsposition in eine Freigabeposition bewegbar ist, wobei in der Verriegelungsposition der Akkumulator fest mit der Werkzeugmaschine verbunden ist und in der Freigabeposition der Akkumulator von der Werkzeugmaschine entnehmbar ist.

Hierdurch kann eine bessere Verbindung zwischen der Werkzeugmaschine und dem Akkumulator im montierten Zustand erreicht werden, sodass eine Relativbewegung zwischen der Werkzeugmaschine und dem Akkumulator verringert wird. Mit anderen Worten: ein Spiel zwischen der Werkzeugmaschine und dem Akkumulator kann eliminiert werden.

Das zweite Hebelelement kann elastisch ausgestaltet sein. Hierdurch kann eine Vorspannung in der Verriegelungsvorrichtung erzeugt werden.

Gemäß einer vorteilhaften Ausführungsform der vorliegenden Erfindung kann es möglich sein, dass der Akkumulator ein drittes Hebelelement enthält zum reversiblen Betätigen des zweiten Hebelelements von einer ersten Position in eine zweite Position.

Hierdurch kann die Handhabung der Verriegelungsvorrichtung zum wiederlösbaren Verbinden des Akkumulators mit der Werkzeugmaschine erleichtert werden.

Entsprechend einer vorteilhaften Ausführungsform der vorliegenden Erfindung kann es möglich sein, dass das zweite Hebelelement wenigstens teilweise elastisch ausgestaltet ist.

Hierdurch kann eine Vorspannung von der Verriegelungsvorrichtung für einen höheren Anpressdruck des Akkumulators auf die Werkzeugmaschine erzeugt werden.

Gemäß Anspruch 1 und 5 der vorliegenden Erfindung wird die Verriegelungsvorrichtung als ein Kniehebelmechanismus ausgestaltet. Hierdurch kann auch einfache Art und Weise die Verriegelungsvorrichtung realisiert werden.

Entsprechend einer vorteilhaften Ausführungsform der vorliegenden Erfindung kann es möglich sein, dass wenigstens ein elastisches Anschlagelement zwischen Akkumulator und Werkzeugmaschine enthalten ist, wobei das wenigstens eine elastisches Anschlagelement der Verriegelungsvorrichtung gegenüberliegend positioniert ist.

Darüber hinaus wird die Aufgabe gelöst durch einen Akkumulator zur Versorgung einer Werkzeugmaschine mit elektrischer Energie.

Erfindungsgemäß ist vorgesehen, dass der Akkumulator eine Verriegelungsvorrichtung zum wiederlösbaren Verbinden des Akkumulators mit der Werkzeugmaschine enthält, wobei die Verriegelungsvorrichtung wenigstens ein erstes und zweites miteinander gelenkig verbundene Hebelelement enthält, sodass die Verriegelungsvorrichtung reversibel von einer Verriegelungsposition in eine Freigabeposition bewegbar ist, wobei in der Verriegelungsposition der Akkumulator fest mit der Werkzeugmaschine verbunden ist und in der Freigabeposition der Akkumulator von der Werkzeugmaschine entnehmbar ist.

Hierdurch kann eine bessere Verbindung zwischen der Werkzeugmaschine und dem Akkumulator im montierten Zustand erreicht werden, sodass eine Relativbewegung zwischen der Werkzeugmaschine und dem Akkumulator verringert wird. Mit anderen Worten: ein Spiel zwischen der Werkzeugmaschine und dem Akkumulator kann eliminiert werden.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Rückansicht auf eine Werkzeugmaschine mit einem Akkumulator in einem montierten Zustand;
- Figur 2: eine perspektivische Rückansicht auf die Werkzeugmaschine mit dem Akkumulator in einem demontierten Zustand;
- Figur 3a: eine perspektivische Detailansicht auf eine Akkuschnittstelle der Werkzeugmaschine;
- Figur 3b: perspektivische Schnittansicht auf die Akkuschnittstelle der Werkzeugmaschine
- Figur 4: eine seitliche Schnittansicht auf den Akkumulator mit der Verriegelungsvorrichtung in einem ersten Zustand;
- Figur 5: eine perspektivische Ansicht auf den Akkumulator mit der Verriegelungsvorrichtung in dem ersten Zustand;
- Figur 6: eine seitliche Schnittansicht auf den Akkumulator mit der Verriegelungsvorrichtung in einem zweiten Zustand;
- Figur 7: eine perspektivische Ansicht auf den Akkumulator mit der Verriegelungsvorrichtung in dem zweiten Zustand;
- Figur 8: eine seitliche Schnittansicht auf den Akkumulator mit der Verriegelungsvorrichtung in einem dritten Zustand;
- Figur 9: eine perspektivische Ansicht auf den Akkumulator mit der Verriegelungsvorrichtung in dem dritten Zustand;
- Figur 10: eine seitliche Schnittansicht auf den Akkumulator mit der Verriegelungsvorrichtung in einem vierten Zustand;
- Figur 11: eine perspektivische Ansicht auf den Akkumulator mit der Verriegelungsvorrichtung in dem vierten Zustand;
- Figur 12: eine seitliche Schnittansicht auf den Akkumulator mit der Verriegelungsvorrichtung in einem fünften Zustand; und
- Figur 13: eine perspektivische Ansicht auf den Akkumulator mit der Verriegelungsvorrichtung in dem fünften Zustand.

### Ausführungsbeispiele:

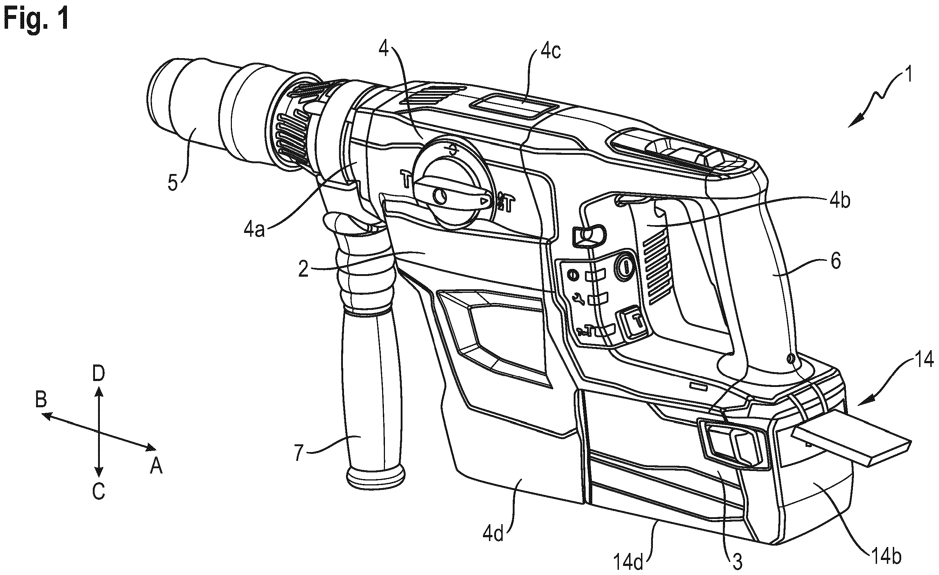

In Figur 1 zeigt ein System 1 enthaltend eine Werkzeugmaschine 2 und einen Akkumulator 3 in einem ersten Zustand, wobei der Akkumulator 3 mit der Werkzeugmaschine 2 verbunden ist. Der Akkumulator 3 dient zur Versorgung der Werkzeugmaschine 2 mit elektrischer Energie.

Der Akkumulator 3 kann auch als Akku oder Batterie bezeichnet werden.

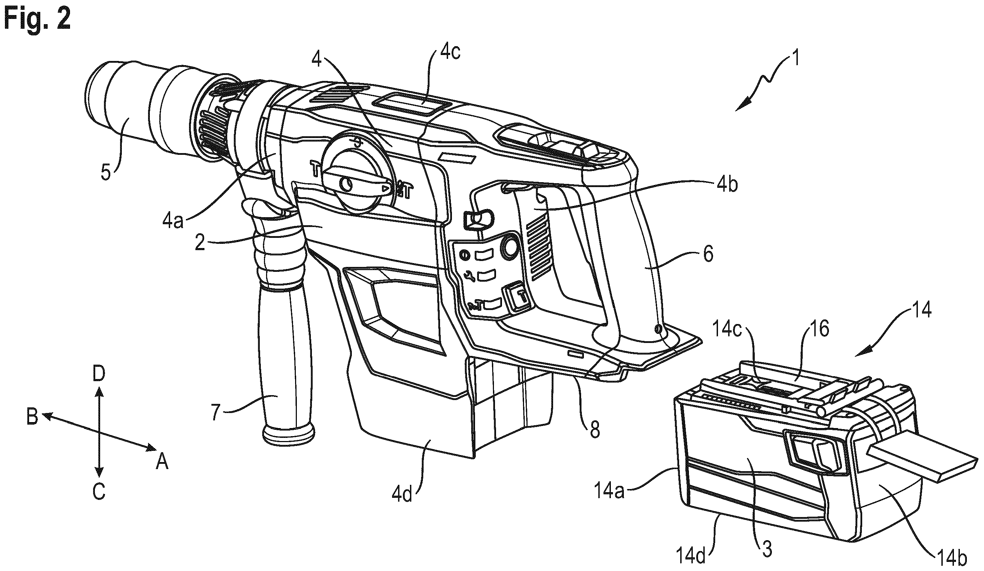

In Figur 2 ist die Werkzeugmaschine 2 und der Akkumulator 3 in einem zweiten Zustand gezeigt, wobei der Akkumulator in Richtung A von der Werkzeugmaschine 2 entfernt bzw. gezogen ist.

Die Werkzeugmaschine 2 ist beispielhaft in Form eines Bohrhammers ausgestaltet. Alternativ kann die Werkzeugmaschine 2 in Form eines Schleifgeräts, einer Säge, eines Meißelhammers oder dergleichen ausgestaltet sein.

Die in Figur 1 Werkzeugmaschine 2 enthält dabei im Wesentlichen ein Gehäuse 4, eine Werkzeugaufnahme 5, einen Haupthandgriff 6, einen Hilfshandgriff 7 und eine Akku-Schnittstelle 8.

Das Gehäuse 4 der Werkzeugmaschine 2 weist dabei ein vorderes Ende 4a, ein hinteres Ende 4b, eine Oberseite 4c und eine Unterseite 4d auf.

Im Inneren des Gehäuses 4 der Werkzeugmaschine 2 ist ein Antrieb in Form eines Elektromotors, ein Getriebe, ein Schlagwerk sowie ein Steuerungseinrichtung positioniert. Der Antrieb, das Getriebe, das Schlagwerk und auch die Steuerungseinrichtung sind nicht in den Figuren gezeigt.

Die Werkzeugaufnahme 5 ist an dem vorderen Ende 4a des Gehäuses 4 der Werkzeugmaschine 2 positioniert und dient zum Aufnehmen und Halten eines Werkzeugs. In dem vorliegenden Ausführungsbeispiel, bei dem die Werkzeugmaschine 2 als Bohrhammer ausgestaltet ist, handelt es sich bei dem Werkzeug um einen Bohrer. Das Werkzeug ist in den Figuren nicht dargestellt.

Der Haupthandgriff 6 ist an dem hinteren Ende 4b des Gehäuses 4 der Werkzeugmaschine 2 positioniert und dient einem Anwender zum Halten und Führen der Werkzeugmaschine 2. Der Anwender der Werkzeugmaschine 2 ist in den Figuren nicht gezeigt.

Der Hilfshandgriff 7 ist ebenfalls an dem vorderen Ende 4a des Gehäuses 4 der Werkzeugmaschine 2 positioniert und dient einem Anwender zusätzlich zum Haupthandgriff 6 zum Halten und Führen der Werkzeugmaschine 2. Wie in Figur 1 und 2 ersichtlich ist der Hilfshandgriff 7 in Pfeilrichtung A vor der Werkzeugaufnahme 5 angeordnet. Der Hilfshandgriff 7 wiederlösbar mit dem Gehäuse 4 der Werkzeugmaschine 2 verbunden.

Wie ebenfalls in Figur 1 und 2 erkennbar, ist eine Akku-Schnittstelle 8 an dem hinteren Ende 4b des Gehäuses 4 der Werkzeugmaschine 2 positioniert. Die Akku-Schnittstelle 8 ist dabei in Pfeilrichtung C unterhalb des Haupthandgriffs 6 angeordnet und dient zum Aufnehmen und Halten des Akkumulators 3.

Die Akku-Schnittstelle 8 enthält dabei im Wesentlichen eine mechanische Anschlusseinrichtung sowie ein elektrische Anschlusseinrichtung. Die mechanische Anschlusseinrichtung dient dabei werkzeugmaschinenseitig zum formschlüssigen Anbinden des Akkumulators 3 an die Werkzeugmaschine 2. Die elektrische Anschlusseinrichtung dient werkzeugmaschinenseitig hingegen zum elektrischen Anbinden des Akkumulators 3 an die Werkzeugmaschine 2, sodass elektrische Energie von dem Akkumulator 3 zu der Werkzeugmaschine 2 gelangen kann.

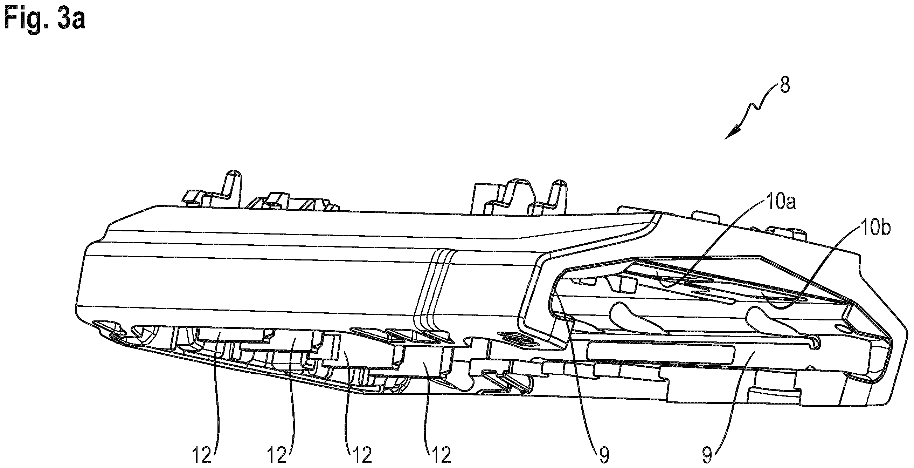

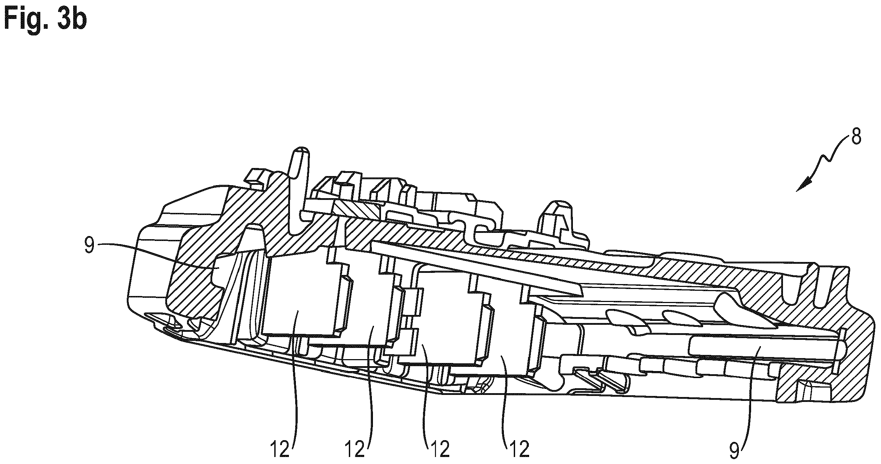

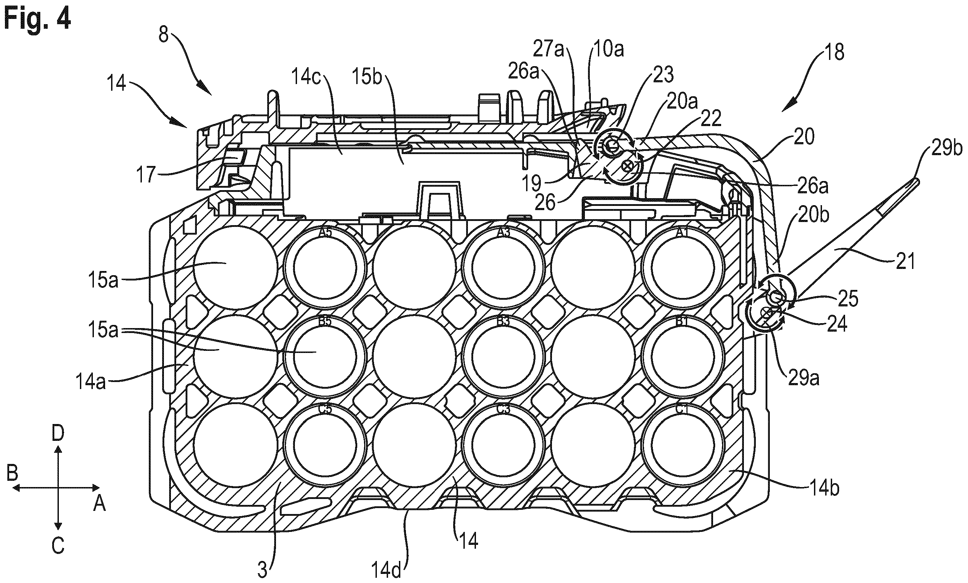

Wie in Figur 3a und 3b angedeutet, ist die mechanische Anschlusseinrichtung im Wesentlichen in Form von zwei Nuten 9 sowie einer ersten und zweiten Aussparung 10a, 10b ausgestaltet. Die Nuten 9 können auch als Fugen oder Furchen bezeichnet werden. Wie nachfolgend noch beschrieben dienen die Nuten 9 zum Aufnehmen von korrespondierenden Schienen 11 an dem Akkumulator 3. Die erste und zweite Aussparung 10a, 10b dient zum Aufnehmen eines Hebelelements des Akkumulators 3, sodass eine form- und kraftschlüssige Verbindung zwischen dem Akkumulator 3 und der Werkzeugmaschine 2 gebildet werden kann. Wie in Figur 4 gezeigt, weist die erste und zweite Aussparung 10a, 10b im Wesentlichen eine dreieckige Querschnittsfläche mit einem gewissen Hinterschnitt in Pfeilrichtung A auf.

Wie ebenfalls in den Figuren 3a und 3b angedeutet, ist die elektrische Anschlusseinrichtung im Wesentlichen durch vier Stecker 12 ausgestaltet. Die vier Stecker 12 dienen dazu, in entsprechende bzw. korrespondierende Buchsen 13 an dem Akkumulator 3 eingesteckt zu werden, wodurch eine elektrische Verbindung zwischen dem Akkumulator 3 und der Werkzeugmaschine 2 erzeugt wird.

Wie in den Figuren gezeigt enthält der Akkumulator 3 ein Akku-Gehäuse 14 mit einer Vorderseite 14a, einer Rückseite 14b, eine Oberseite 14c und eine Unterseite 14d.

Im Inneren des Akku-Gehäuses 14 sind eine Vielzahl an Energiespeicherzellen 15a sowie eine Steuereinrichtung 15b positioniert. Die Energiespeicherzellen 15a dienen zum Aufnehmen, Speichern und Abgeben von elektrischer Energie. In den vorliegenden Ausführungsbeispiel basieren die Energiespeicherzellen 15a auf einer Lithium-Ionen-Technologie.

Auf der Oberseite 14c des Akku-Gehäuses 14 ist eine Werkzeugmaschinen-Schnittstelle 16 positioniert. Die Werkzeugmaschinen-Schnittstelle 16 enthält ebenfalls im Wesentlichen eine mechanische Anschlusseinrichtung sowie ein elektrische Anschlusseinrichtung. Die mechanische Anschlusseinrichtung dient dabei akku-seitig zum formschlüssigen Anbinden des Akkumulators 3 an die Werkzeugmaschine 2. Die elektrische Anschlusseinrichtung dient akku-seitig hingegen zum elektrischen Anbinden des Akkumulators 3 an die Werkzeugmaschine 2, sodass elektrische Energie von dem Akkumulator 3 zu der Werkzeugmaschine 2 gelangen kann. Die elektrische Anschlusseinrichtung ist dabei auf der Oberseite 14c sowie in der Nähe der Vorderseite 14a des Akku-Gehäuses 14 angeordnet.

Wie in den Figuren angedeutet, insbesondere in Figur 2, ist die mechanische Anschlusseinrichtung im Wesentlichen in Form der zwei Schienen 11 ausgestaltet. Die Schienen 11 sind dabei so gestaltete, dass diese in die korrespondierenden Nuten 9 der Akku-Schnittstelle 8 an der Werkzeugmaschine 2 aufgenommen werden können.

Wie in Figur 2 angedeutet, ist die elektrische Anschlusseinrichtung der Werkzeugmaschinen-Schnittstelle 16 des Akkumulators 3 im Wesentlichen durch vier Buchsen 13 ausgestaltet. Die vier Buchsen 13 dienen dazu, die korrespondierende Stecker 11 an der mechanische Anschlusseinrichtung der Akku-Schnittstelle 8 der Werkzeugmaschine 2 aufzunehmen, wodurch eine elektrische Verbindung zwischen dem Akkumulator 3 und der Werkzeugmaschine 2 erzeugt wird.

Darüber hinaus ist ein elastisches Anschlagelement 17 an der Akku-Schnittstelle 8 der Werkzeugmaschine 2 vorgesehen. Wie in Figur 4 am besten ersichtlich ist das elastische Anschlagelement 17 so positioniert, dass es zwischen der Werkzeugmaschinen-Schnittstelle 16 und der Akku-Schnittstelle 8 seine elastische Federkraft ausüben kann.

Wie ebenfalls in den Figuren ersichtlich enthält der Akkumulator 3 des Weiteren eine Verriegelungsvorrichtung 18. Die Verriegelungsvorrichtung 18 dient dabei zum wiederlösbaren Verbinden des Akkumulators 3 mit der Werkzeugmaschine 2 und erstreckt sich von der Oberseite 14c zu der Rückseite 14b des Akku-Gehäuse 14.

Die Verriegelungselement 18 enthält im Wesentlichen ein erstes Hebelelement 19, zweites Hebelelement 20, drittes Hebelelement 21, ein erstes Drehgelenk 22, ein zweites Drehgelenk 23, ein drittes Drehgelenk 24 und ein viertes Drehgelenk 25.

Das erste Hebelelement 19 enthält einen länglichen Grundkörper 26 mit einem ersten Ende 26a und einem zweiten Ende 26b. Das erste Hebelelement 19 kann als Verriegelungselement bezeichnet werden. Das erste Ende 26a des Grundkörpers 26 ist mittels des ersten Drehgelenks 22 drehbar an der Oberseite 14c des Akku-Gehäuses 14 positioniert. An dem zweiten Ende 26b des Grundkörpers 26 ist ein erstes und zweites Hakenelement 27a, 27b vorgesehen, welches sich im Wesentlichen jeweils in einem stumpfen Winkel zu einer Längsausrichtung des Grundkörpers 26 erstreckt. Das erste und zweite Hakenelement 27a, 27b ist in seiner Form ausgestaltet, um in die entsprechenden Aussparung an der Akku-Schnittstelle 8 der Werkzeugmaschine 2 eingefügt zu werden. Die Form der Hakenelemente 27a, 27b entspricht dabei im Wesentlichen der Form der Aussparungen 10a, 10b.

Des Weiteren ist an dem ersten Ende 26a des Grundkörpers 26 das zweite Drehgelenk 23 enthalten. Das zweite Drehgelenk 23 ist dabei in Pfeilrichtung D schräg über dem ersten Drehgelenk 22 positioniert. Wie nachfolgend noch weiter im Detail beschrieben, ist das erste und zweite Drehgelenk 22, 23 so zueinander angeordnet, dass durch ein Drehen des ersten Hebelelements 19 um einen Drehpunkt des zweiten Drehgelenk 23 eine konzentrische Drehbewegung des ersten Hebelelements 19 stattfindet.

Das zweite Hebelelement 20 enthält im Wesentlichen einen gekrümmten Grundkörper 28. Das zweite Hebelelement 20 kann als Verbindungselement bezeichnet werden. Das zweite Hebelelement 20 verbindet das erste Hebelelement 19 mit dem dritten Hebelelement 21. Der gekrümmte Grundkörper 28 kann auch als gebogener Grundkörper bezeichnet werden. Der gekrümmte Grundkörper 28 ist so ausgestaltet, dass das zweite Hebelelement 20 eine gewisse Federfunktion bzw. Federwirkung aufweist. Der gekrümmte Grundkörper 28 weist hierzu eine Lang-zu-Dicke-Verhältnis auf und ist aus einem Werkstoff gefertigt, dass das zweite Hebelelement 20 eine gewisse Flexibilität bzw. Elastizität aufweist. Wie in den Figuren ersichtlich folgt die Kontur des gekrümmten Grundkörpers 28 im Wesentlichen einem gekrümmten Übergang von der Oberseite 14c zu der Rückseite 14b des Akku-Gehäuse 14. Der gekrümmte Übergang von der Oberseite 14c zu der Rückseite 14b des Akku-Gehäuse 14 kann auch als Bogen, abgerundete Seitenkante oder Abrundung bezeichnet werden. Der gekrümmte Grundkörper 28 ist in dieser Art und Weise ausgestaltet, um platzsparend an die Oberseite 14c und Rückseite 14b des Akku-Gehäuses 14 angelegt zu werden.

Ein erstes Ende 20a des zweiten Hebelelements 20 ist durch das zweite Drehgelenk 23 mit dem ersten Hebelelement 19 drehbar verbunden, sodass das erste Hebelelement 19 und das zweite Hebelelement 20 um den Drehpunkt des zweiten Drehgelenks 23 relativ zueinander geschwenkt werden können.

An dem zweiten Ende 20b des zweiten Hebelelements 20 ist das dritte Drehgelenk 24 vorgesehen.

Das dritte Hebelelement 21 weist einen flachen länglichen Grundkörper 29 auf, der ein erstes Ende 29a und ein zweites Ende 29b enthält. Das dritte Hebelelement 21 kann auch als Bedienelement bezeichnet werden. Das als Bedienelement ausgestaltete dritte Hebelelement 21 dient einem Anwender der Verriegelungsvorrichtung 18 als Aktivierungselement, um die Verriegelungsvorrichtung 18 zu bedienen.

Gemäß einer alternativen Ausgestaltungsform kann die Verriegelungsvorrichtung 18 auch ohne das dritte Hebelelement 21 ausgestaltet sein. Bei dieser Ausgestaltungsform der Verriegelungsvorrichtung 18 dient das zweite Hebelelement 20 als Aktivierungselement, mit dem ein Anwender die Verriegelungsvorrichtung 18 bedienen kann. Das erste Ende 29a des dritten Hebelelements 21 ist durch das dritte Drehgelenk 24 mit der Rückseite 14b des Akku-Gehäuses 14 verbunden, sodass das dritte Hebelelement 21 um das dritte Drehgelenk 24 relativ zu dem Akku-Gehäuse 14 geschwenkt bzw. gedreht werden kann. Das vierte Drehgelenk 25 ist in der Nähe des ersten Endes 29a des dritten Hebelelements 21 positioniert. Wie in Figur 4 ersichtlich ist das vierte Drehgelenk 25 in Pfeilrichtung D über dem dritten Drehgelenk 24 angeordnet. Das zweite Ende 20b des zweiten Hebelelements 20 ist durch das vierte Drehgelenk 25 mit dem ersten Ende 29a des dritten Hebelelements 21 drehbar verbunden, sodass das zweite Hebelelement 20 und dritte Hebelelement 21 relativ zueinander geschwenkt bzw. gedreht werden können.

Wie bereits vorstehend erwähnt dient die Verriegelungsvorrichtung 18 zum wiederlösbaren Verbinden des Akkumulators 3 mit der Werkzeugmaschine 2. Die Verriegelungsvorrichtung 18 kann hierzu reversibel von einer Verriegelungsposition in eine Freigabeposition bewegt werden. In der Verriegelungsposition ist der die Werkzeugmaschinen-Schnittstelle 16 des Akkumulators 3 mit Hilfe der Verriegelungsvorrichtung 18 relativ fest mit der Akku-Schnittstelle 8 der Werkzeugmaschine 2 verbunden. Die Verbindung ist wenigstens so fest, dass auch Vibrationen, die während der Verwendung der Werkzeugmaschine 2 entstehen, nicht zu einer Relativbewegung zwischen der Werkzeugmaschine 2 und dem angeschlossenen Akkumulator 3 führen.

Die Funktionsweise der Verriegelungsvorrichtung 18 ist vornehmlich in den Figuren 4 bis 13 gezeigt. Insbesondere ist in den Figuren 4 bis 13 gezeigt, wie die Verriegelungsvorrichtung 18 von einer Freigabeposition in eine Verriegelungsposition bewegt wird. In der Verriegelungsposition sind der Akkumulator 3 und die Werkzeugmaschine 2 miteinander verbunden (vgl. Figur 1) und in der Freigabeposition können der Akkumulator 3 und die Werkzeugmaschine 2 voneinander getrennt werden (vgl. Figur 2).

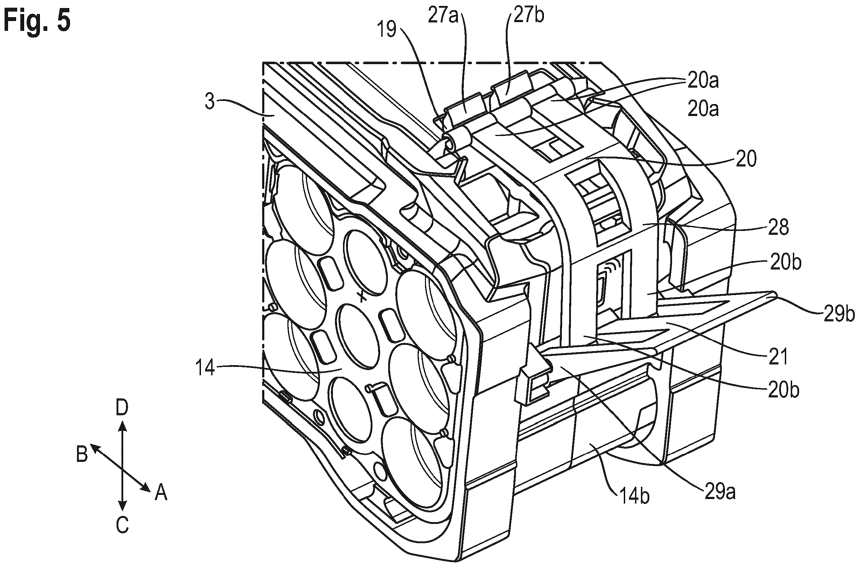

In Figur 4 und 5 ist der Akkumulator 3 mit der Verriegelungsvorrichtung 18 in einer ersten Position dargestellt. Bei der ersten Position handelt sich um eine Freigabeposition, bei der Akkumulator 3 von der Werkzeugmaschine 2 entnommen bzw. in Pfeilrichtung A von der Werkzeugmaschine 2 gezogen werden kann. Eine form- oder kraftschlüssige Verbindung des Akkumulators 3 mit der Werkzeugmaschine 2 ist in der Freigabeposition nicht gegeben. Das zweite Ende 29b des dritten Hebelelements 21 ist so weit wie möglich in Pfeilrichtung D bewegt und damit in der höchsten Position. Wie in Figur 4 erkennbar, ist das elastische Anschlagelement 17 noch nicht zusammengedrückt bzw. noch entspannt, sodass keine bzw. nur ein Minimum an Federkraft von dem elastischen Anschlagelement 17 auf den Akkumulator 3 wirkt.

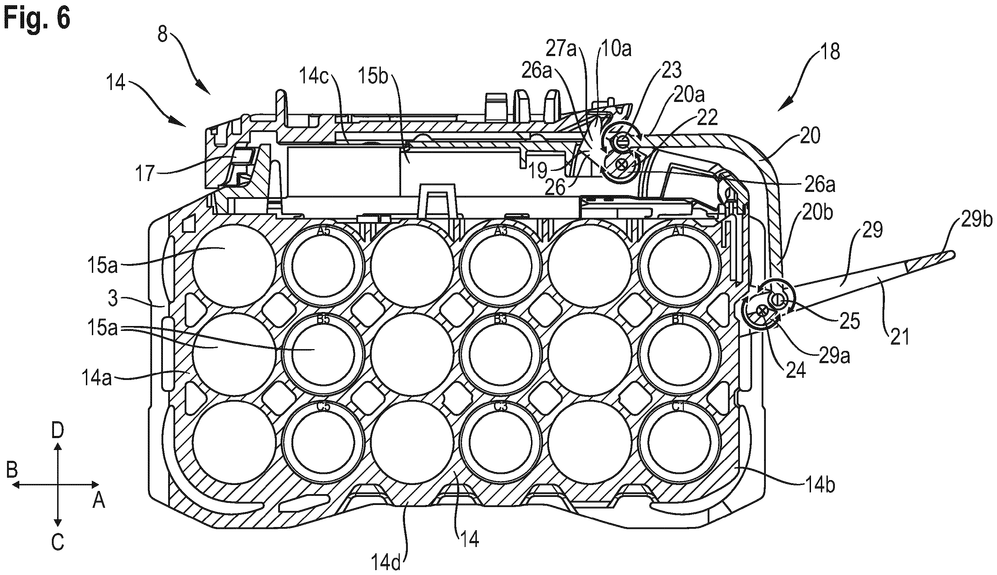

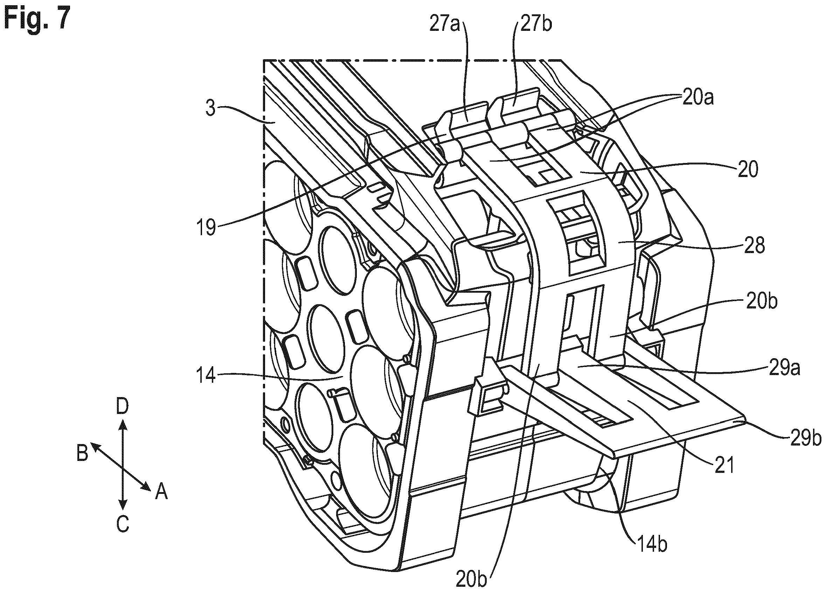

In Figur 6 und 7 ist der Akkumulator 3 mit der Verriegelungsvorrichtung 18 in einer zweiten Position dargestellt. Das zweite Ende 29b des dritten Hebelelements 21 ist eine gewisse Wegstrecke in Pfeilrichtung C nach unten bewegt (d.h. gedrückt). Das erste Ende 29a des dritten Hebelelements 21 dreht sich um den Drehpunkt des dritten Drehgelenks 24 relativ zu der Rückseite 14b des Akku-Gehäuses 14.

Das erste Ende 20a des zweiten Hebelelements 20 bewegt sich in Pfeilrichtung A und das erste Hebelelement 19 dreht sich um den Drehpunkt des ersten Drehgelenkt 22. Das zweite Drehgelenk 23 dient zum Ausgleich der Relativbewegung des ersten Hebelelements 19 und zweiten Hebelelements 20, da sich das erste Hebelelement 19 konzentrisch um den Drehpunkt des zweiten Drehgelenks 23 dreht. Wie in Figur 6 zu erkennen ist, bewegt sich das erste und zweite Hakenelement durch die Drehbewegung des ersten Hebelelements in Pfeilrichtung D und greifen in die beiden Aussparungen 10a, 10b der Akku-Schnittstelle 8 der Werkzeugmaschine 2. Gleichzeitig bewegt sich das zweite Ende 20b des zweiten Hebelelements 20 in Pfeilrichtung C. Durch das Drehen des dritten Hebelelements 21 um den Drehpunkt des dritten Drehgelenks 24 dreht sich das vierte Drehgelenk 25 konzentrisch um den Drehpunkt des dritten Drehgelenks 24. Wie in Figur 6 erkennbar, wird der Akkumulator 3 durch die Bewegung der Verriegelungsvorrichtung 18 in Pfeilrichtung B bewegt, sodass das elastische Anschlagelement 17 nun zusammengedrückt wird. Eine gewisse Federkraft von dem elastischen Anschlagelement 17 wirkt auf den Akkumulator 3.

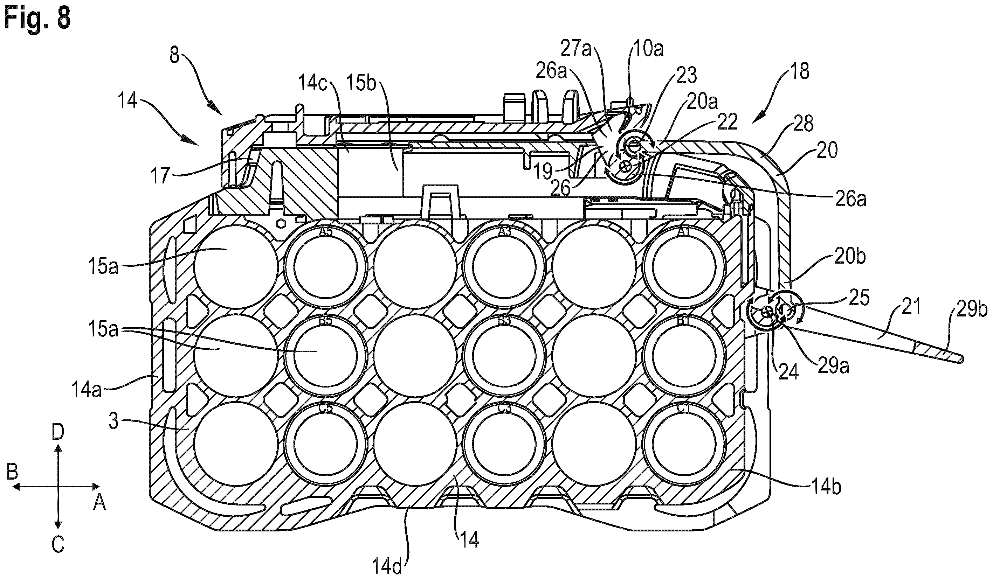

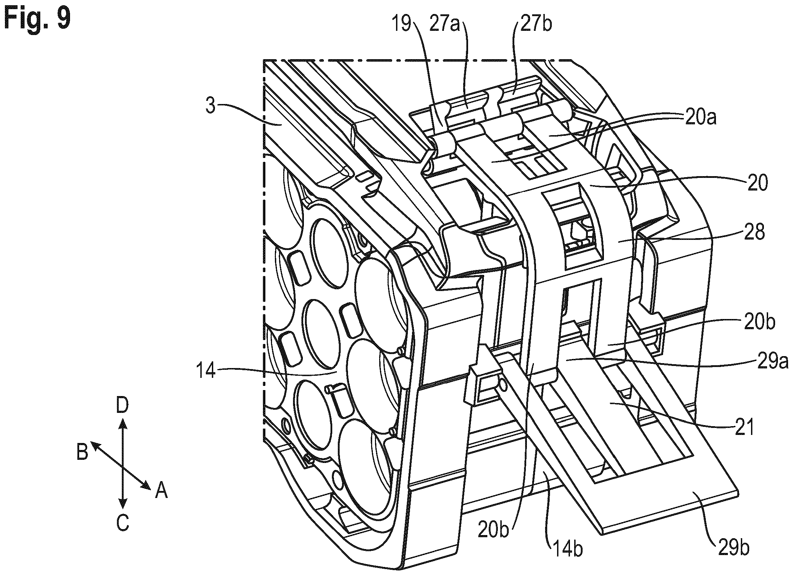

In Figur 8 und 9 ist der Akkumulator 3 mit der Verriegelungsvorrichtung 18 in einer dritten Position dargestellt. Das zweite Ende 29b des dritten Hebelelements 21 ist eine weitere Wegstrecke in Pfeilrichtung C nach unten bewegt (d.h. gedrückt). Das erste Ende 29a des dritten Hebelelements 21 dreht sich weiter um den Drehpunkt des dritten Drehgelenks 24 relativ zu der Rückseite 14b des Akku-Gehäuses 14. Das erste Ende 20a des zweiten Hebelelements 20 wird weiter in Pfeilrichtung A bewegt und gleichzeitig wird das zweite Ende 20b des zweiten Hebelelements 20 weiter in Pfeilrichtung C bewegt. Das erste und zweite Hakenelement 27a, 27b wird weiter durch die Drehbewegung des ersten Hebelelements 19 in Pfeilrichtung D bewegt und greifen weiter in die beiden Aussparungen 10a, 10b der Akku-Schnittstelle 8 der Werkzeugmaschine 2. Der Akkumulator 3 wird durch die Bewegung der Verriegelungsvorrichtung 18 in Pfeilrichtung B bewegt, sodass das elastische Anschlagelement 17 weiter zwischen dem Akkumulator 3 und der Werkzeugmaschine 2 zusammengedrückt wird. Das elastische Anschlagelement 17 drückt mit einer höheren Federkraft auf den Akkumulator 3.

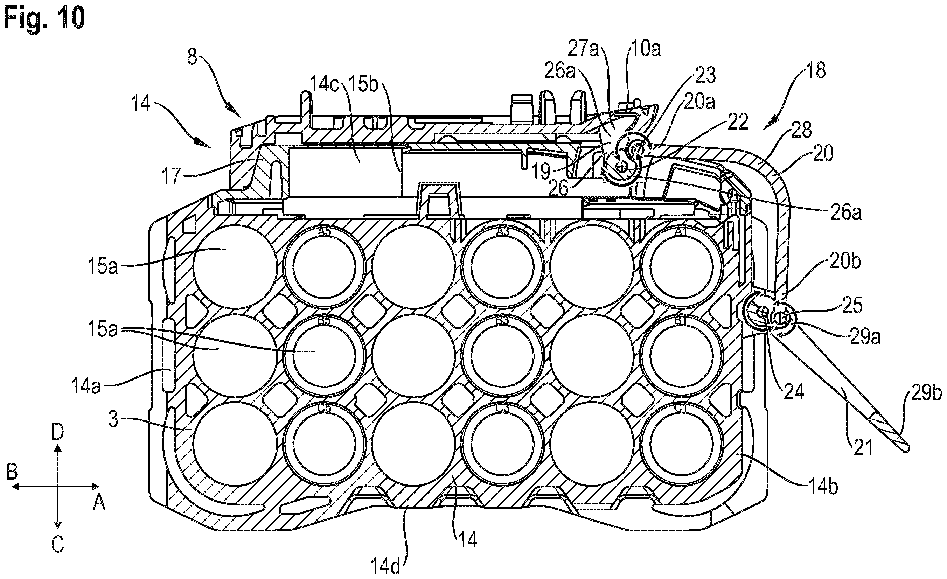

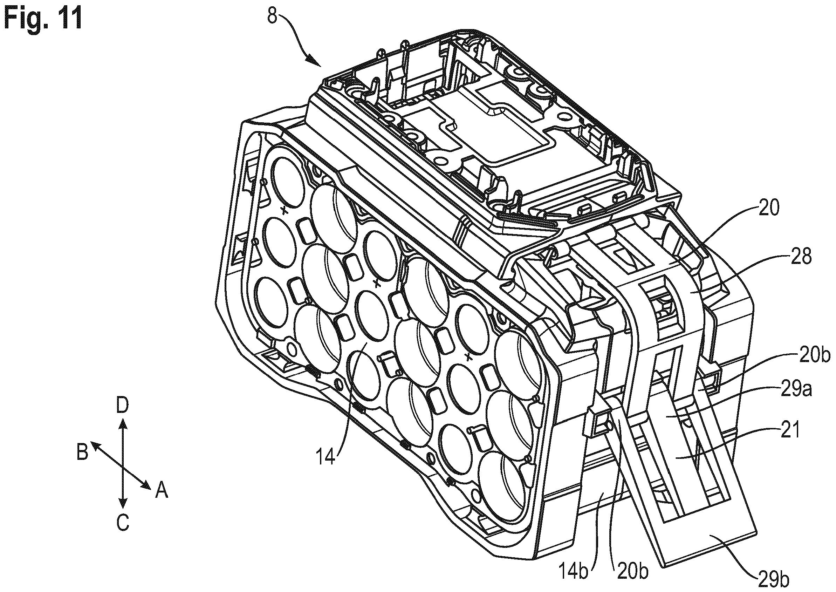

In Figur 10 und 11 ist der Akkumulator 3 mit der Verriegelungsvorrichtung 18 in einer vierten Position dargestellt. Das zweite Ende 29b des dritten Hebelelements 21 ist eine weitere Wegstrecke in Pfeilrichtung C nach unten bewegt (d.h. gedrückt). Das erste Ende 29a des dritten Hebelelements 21 dreht sich weiter um den Drehpunkt des dritten Drehgelenks 24 relativ zu der Rückseite 14b des Akku-Gehäuses 14. Das erste Ende 20a des zweiten Hebelelements 20 wird weiter in Pfeilrichtung A bewegt und gleichzeitig wird das zweite Ende 20b des zweiten Hebelelements 20 weiter in Pfeilrichtung C bewegt. Das erste und zweite Hakenelement 27a, 27b wird weiter durch die Drehbewegung des ersten Hebelelements 19 in Pfeilrichtung D bewegt und greifen weiter in die beiden Aussparungen 10a, 10b der Akku-Schnittstelle 8 der Werkzeugmaschine 2. Der Akkumulator 3 wird durch die Bewegung der Verriegelungsvorrichtung 18 in Pfeilrichtung B bewegt, sodass das elastische Anschlagelement 17 weiter zwischen dem Akkumulator 3 und der Werkzeugmaschine 2 zusammengedrückt wird. Das elastische Anschlagelement 17 drückt mit einer höheren Federkraft auf den Akkumulator 3.

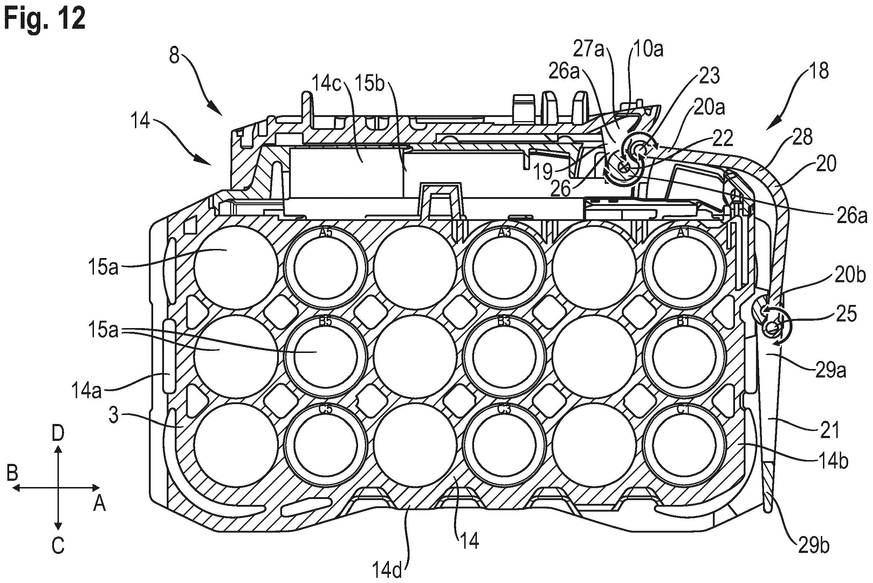

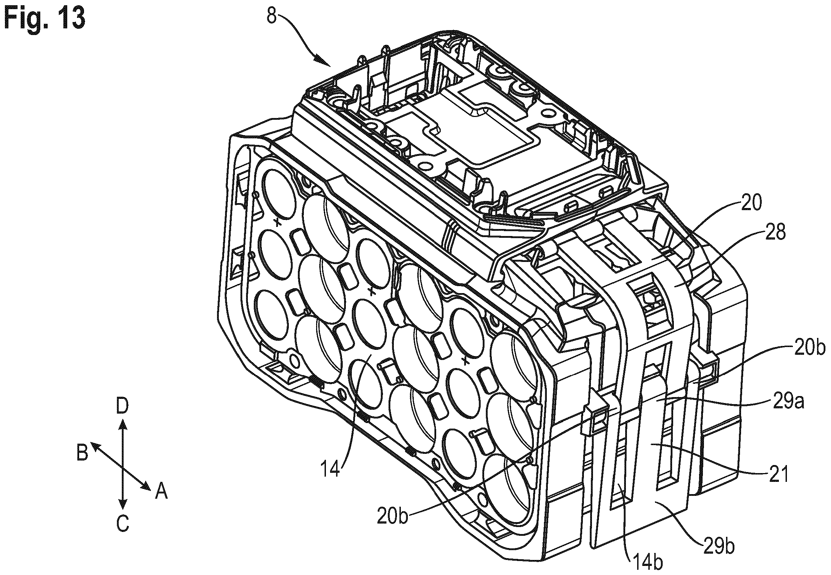

In Figur 12 und 13 ist der Akkumulator 3 mit der Verriegelungsvorrichtung 18 in einer fünften bzw. End-Position dargestellt. Das zweite Ende 29b des dritten Hebelelements 21 ist eine weitere Wegstrecke in Pfeilrichtung C nach unten bewegt (d.h. gedrückt), sodass das dritte Hebelelement 21 flach an der Rückseite 14b des Akku-Gehäuses 14 anliegt. Das erste Ende 20a des zweiten Hebelelements 20 wird weiter in Pfeilrichtung A bewegt und gleichzeitig wird das zweite Ende 20b des zweiten Hebelelements 20 weiter in Pfeilrichtung C bewegt. Das erste und zweite Hakenelement 27a, 27b wird weiter durch die Drehbewegung des ersten Hebelelements 19 in Pfeilrichtung D bewegt und greifen nun vollständig in die beiden Aussparungen 10a, 10b der Akku-Schnittstelle 8 der Werkzeugmaschine 2. Der Akkumulator 3 ist nun durch die Bewegung der Verriegelungsvorrichtung 18 so weit wie möglich in Pfeilrichtung B bewegt. Das elastische Anschlagelement 17 ist jetzt vollständig zwischen dem Akkumulator 3 und der Werkzeugmaschine 2 zusammengedrückt. Das elastische Anschlagelement 17 drückt mit maximaler Federkraft in Pfeilrichtung A auf den Akkumulator 3.

Der Akkumulator 3 ist nun vollständig und fest mit der Werkzeugmaschine 2 verbunden.

Gemäß einer alternativen Ausführungsform der Verriegelungsvorrichtung 18 kann es auch möglich sein, dass die Verriegelungsvorrichtung 18 ohne das zweite und vierte Drehgelenk 23, 25 ausgestaltet ist.

### Bezugszeichen:

- 1: System
- 2: Werkzeugmaschine
- 3: Akkumulator
- 4: Gehäuse der Werkzeugmaschine
- 4a: vorderes Ende des Gehäuses der Werkzeugmaschine
- 4b: hinteres Ende des Gehäuses der Werkzeugmaschine
- 4c: Oberseite des Gehäuses der Werkzeugmaschine
- 4d: Unterseite des Gehäuses der Werkzeugmaschine
- 5: Werkzeugaufnahme
- 6: Haupthandgriff
- 7: Hilfshandgriff
- 8: Akku-Schnittstelle
- 9: Nut
- 10a: erste Aussparung
- 10b: zweite Aussparung
- 11: Schiene
- 12: Stecker
- 13: Buchse
- 14: Akku-Gehäuse
- 14a: Vorderseite des Akku-Gehäuses
- 14b: Rückseite des Akku-Gehäuses
- 14c: Oberseite des Akku-Gehäuses
- 14d: Unterseite des Akku-Gehäuses
- 15a: Energiespeicherzellen
- 15b: Steuereinrichtung
- 16: Werkzeugmaschinen-Schnittstelle
- 17: Anschlagelement
- 18: Verriegelungsvorrichtung
- 19: erstes Hebelelement
- 20: zweites Hebelelement
- 20a: erstes Endes des zweiten Hebelelements
- 20b: zweites Ende des zweiten Hebelelements
- 21: drittes Hebelelement
- 22: erstes Drehgelenk
- 23: zweites Drehgelenk
- 24: drittes Drehgelenk
- 25: viertes Drehgelenk
- 26: länglicher Grundkörper des ersten Hebelelements
- 26a: erstes Ende des länglichen Grundkörpers
- 26b: zweites Ende des länglichen Grundkörpers
- 27a: zweites Hakenelement
- 27b: zweites Hakenelement
- 28: gekrümmter Grundkörper des zweiten Hebelelements
- 29a: erstes Ende des dritten Hebelelements
- 29b: zweites Ende des dritten Hebelelements

## Patentansprüche

1. System (1) enthaltend eine Werkzeugmaschine (2) und einen Akkumulator (3) zur Versorgung der Werkzeugmaschine (2) mit elektrischer Energie, wobei der Akkumulator (3) eine Verriegelungsvorrichtung (18) zum wiederlösbaren Verbinden des Akkumulators (3) mit der Werkzeugmaschine (2) enthält, **dadurch gekennzeichnet, dass** die Verriegelungsvorrichtung (18) wenigstens ein erstes und zweites miteinander gelenkig verbundene Hebelelement (19, 20) enthält, sodass die Verriegelungsvorrichtung (18) reversibel von einer Verriegelungsposition in eine Freigabeposition bewegbar ist, wobei in der Verriegelungsposition der Akkumulator (3) fest mit der Werkzeugmaschine (2) verbunden ist und in der Freigabeposition der Akkumulator (3) von der Werkzeugmaschine (2) entnehmbar ist, wobei die Verriegelungsvorrichtung (18) als ein Kniehebelmechanismus ausgestaltet ist.

2. System (1) nach Anspruch 1,
**dadurch gekennzeichnet, dass** der Akkumulator (2) ein drittes Hebelelement (21) enthält zum reversiblen Betätigen des zweiten Hebelelements (20) von einer ersten Position in eine zweite Position.

3. System (1) nach Anspruch 1 oder 2,
**dadurch gekennzeichnet, dass** das zweite Hebelelement (20) wenigstens teilweise elastisch ausgestaltet ist.

4. System (1) nach wenigstens einem der Ansprüche 1 bis 3,
**dadurch gekennzeichnet, dass** wenigstens ein elastisches Anschlagelement (17) zwischen Akkumulator (3) und Werkzeugmaschine (2) enthalten ist, wobei das wenigstens eine elastisches Anschlagelement (17) der Verriegelungsvorrichtung (18) gegenüberliegend positioniert ist.

5. Akkumulator (3) zur Versorgung einer Werkzeugmaschine (2) mit elektrischer Energie für ein System (1) nach wenigstens einem der Ansprüche 1 bis 4, wobei der Akkumulator (3) eine Verriegelungsvorrichtung (18) zum wiederlösbaren Verbinden des Akkumulators (3) mit der Werkzeugmaschine (2) enthält, **dadurch gekennzeichnet, dass** die Verriegelungsvorrichtung (18) wenigstens ein erstes und zweites miteinander gelenkig verbundene Hebelelement (19, 20) enthält, sodass die Verriegelungsvorrichtung (18) reversibel von einer Verriegelungsposition in eine Freigabeposition bewegbar ist, wobei in der Verriegelungsposition der Akkumulator (3) fest mit der Werkzeugmaschine (2) verbunden ist und in der Freigabeposition der Akkumulator (3) von der Werkzeugmaschine (2) entnehmbar ist, wobei die Verriegelungsvorrichtung (18) als ein Kniehebelmechanismus ausgestaltet ist.

## Claims

1. System (1) comprising a power tool (2) and a rechargeable battery (3) for supplying the power tool (2) with electrical energy, wherein the rechargeable battery (3) comprises a locking apparatus (18) for releasably connecting the rechargeable battery (3) to the power tool (2), **characterized in that** the locking apparatus (18) comprises at least one first and second lever element (19, 20) that are connected together in an articulated manner, such that the locking apparatus (18) is reversibly movable from a locking position into a releasing position, wherein, in the locking position, the rechargeable battery (3) is firmly connected to the power tool (2) and, in the releasing position, the rechargeable battery (3) is removable from the power tool (2), wherein the locking apparatus (18) is configured as a toggle mechanism.

2. System (1) according to Claim 1,
**characterized in that** the rechargeable battery (2) comprises a third lever element (21) for reversibly actuating the second lever element (20) from a first position into a second position.

3. System (1) according to Claim 1 or 2,
**characterized in that** the second lever element (20) is configured at least partially in an elastic manner.

4. System (1) according to at least one of Claims 1 to 3,
**characterized in that** at least one elastic stop element (17) is present between the rechargeable battery (3) and power tool (2), wherein the at least one elastic stop element (17) is positioned opposite the locking apparatus (18).

5. Rechargeable battery (3) for supplying a power tool (2) with electrical energy for a system (1) according to at least one of Claims 1 to 4,
wherein the rechargeable battery (3) comprises a locking apparatus (18) for releasably connecting the rechargeable battery (3) to the power tool (2), **characterized in that** the locking apparatus (18) comprises at least one first and second lever element (19, 20) that are connected together in an articulated manner, such that the locking apparatus (18) is reversibly movable from a locking position into a releasing position, wherein, in the locking position, the rechargeable battery (3) is firmly connected to the power tool (2) and, in the releasing position, the rechargeable battery (3) is removable from the power tool (2), wherein the locking apparatus (18) is configured as a toggle mechanism.

## Revendications

1. Système (1) comprenant un outil-machine (2) et un accumulateur (3) pour alimenter l'outil-machine (2) en énergie électrique, l'accumulateur (3) comprenant un dispositif de verrouillage (18) pour relier de manière amovible l'accumulateur (3) à l'outil-machine (2), **caractérisé en ce que** le dispositif de verrouillage (18) comprend au moins un premier et un deuxième élément formant levier (19, 20) reliés entre eux de manière articulée, de sorte que le dispositif de verrouillage (18) est apte à être déplacé de manière réversible d'une position de verrouillage à une position de déverrouillage, l'accumulateur (3) étant relié de manière fixe à l'outil-machine (2) dans la position de verrouillage et l'accumulateur (3) étant apte à être retiré de l'outil-machine (2) dans la position de libération, le dispositif de verrouillage (18) étant conçu sous la forme d'un mécanisme à genouillère.

2. Système (1) selon la revendication 1,
**caractérisé en ce que** l'accumulateur (2) contient un troisième élément formant levier (21) pour actionner de manière réversible le deuxième élément formant levier (20) d'une première position à une deuxième position.

3. Système (1) selon la revendication 1 ou la revendication 2,
**caractérisé en ce que** le deuxième élément formant levier (20) est au moins partiellement élastique.

4. Système (1) selon au moins une des revendications 1 à 3,
**caractérisé en ce qu'**au moins un élément de butée élastique (17) est compris entre l'accumulateur (3) et l'outil-machine (2), ledit au moins un élément de butée élastique (17) étant positionné à l'opposé du dispositif de verrouillage (18).

5. Accumulateur (3) pour alimenter un outil-machine (2) en énergie électrique pour un système (1) selon au moins l'une des revendications 1 à 4,
l'accumulateur (3) comprenant un dispositif de verrouillage (18) pour connecter de manière amovible l'accumulateur (3) à l'outil-machine (2), **caractérisé en ce que** le dispositif de verrouillage (18) comprend au moins un premier et un deuxième élément formant levier (19, 20) reliés entre eux de manière articulée, de sorte que le dispositif de verrouillage (18) est apte à être déplacé de manière réversible d'une position de verrouillage à une position de libération, l'accumulateur (3) étant relié de manière fixe à l'outil-machine (2) en position de verrouillage et l'accumulateur (3) étant apte à être retiré de l'outil-machine (2) en position de libération, le dispositif de verrouillage (18) étant conçu sous la forme d'un mécanisme à genouillère.
